# EUROPEAN PATENT SPECIFICATION

(11) **EP 4 289 390 B1**
(45) Date of publication and mention of the grant of the patent: **30.07.2025**
(21) Application number: 23176634.6
(22) Date of filing: 01.06.2023
(51) Int. Cl.: A61C 8/00

(54) **ABUTMENT COUPLED TO UPPER PART OF DENTAL IMPLANT FIXTURE**
AN DEN OBEREN TEIL EINER ZAHNIMPLANTATHALTERUNG GEKOPPELTES ABUTMENT
BUTÉE COUPLÉE À LA PARTIE SUPÉRIEURE D'UN ACCESSOIRE D'IMPLANT DENTAIRE

(30) Priority: 07.06.2022 KR 20220068983
(43) Date of publication of application: 13.12.2023
(73) Proprietor: Oneday Biotech Co., Ltd., Daegu 42721 (KR)
(72) Inventor: KIM, Jin Hwan, 04426 Seoul (KR); SONG, Jae Hyun, 03140 Seoul (KR)
(74) Representative: BCKIP Part mbB

(56) References cited:
- DE-A1- 102013 102 411
- KR-A- 20180 082 913

## Description

### CROSS-REFERENCE TO RELATED APPLICATION

This application claims priority on Korean Patent Applications No. 10-2022-0068983filed on June 7, 2022 in the Korean Intellectual Property Office.

### TECHNICAL FIELD

The present invention relates to an abutment coupled to an upper part of a dental implant fixture.

### BACKGROUND

A dental implant (hereinafter, briefly referred to as an "implant") is an artificial root that is anchored in the gum and jawbone of a patient to support a crown which restores the structure and function of a tooth missing or pulled out. Therefore, the implant is also called an artificial tooth or a third tooth.

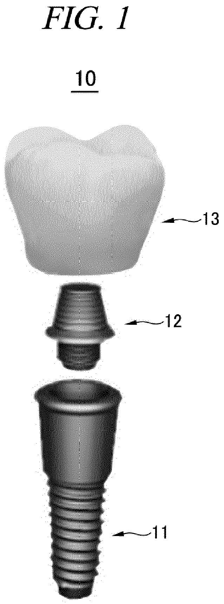

**FIG. 1** is a configuration diagram of a general implant. Referring to **FIG. 1****,** an implant 10 includes a fixture 11, an abutment 12 and a crown 13. The fixture 11 is installed in the alveolar bone and serves as a tooth root, and the abutment 12 is coupled to the fixture 11 and transfer a force applied to the crown 13 to the fixture. Further, the crown 13 is coupled to the abutment 12 and serves as a tooth.

Implant surgery is performed by cutting open the gum in the mouth of a patient to check an implant site, and drilling the jawbone to implant the fixture 11 into the jawbone. When a predetermined time elapses after the fixture 11 is implanted, the crown 13 is inserted into the fixture 11 by using the abutment 12 to implant the implant 10 in the patient's mouth.

In order to precisely implant the implant 10 in the patient's mouth, a process of taking impressions of the patient's mouth needs to be performed accurately and precisely. Through this process, the customized-abutment 12 adapted to the patient can be fabricated. Then, the crown 13 is inserted into the customized-abutment 12.

Conventionally, a process of taking impressions is performed using an impression coping. Specifically, a mount is affixed to an inner groove of the fixture 11 previously implanted in the patient's mouth and then fixed to the fixture 11 by using a mount driver. Then, the fixture 11 is implanted in the patient's mouth.

Then, the mount is removed from the fixture 11 and the impression coping is affixed to the fixture 11 to perform the process of taking impressions. When the process of taking impressions is completed, the impression coping is removed, and a healing abutment is affixed to the fixture 11 if necessary.

Thereafter, the crown 13 is fabricated using an impression product. During an implant operation, the abutment 12 is affixed to the fixture 11 and the crown 13 is inserted into the abutment 12.

As described above, in a conventional case, a process of affixing each of the mount, the impression coping and the healing abutment to the fixture 11, a processing of separating each of them from the fixture 11, and a process of affixing the abutment 12 to the fixture 11 need to be performed. In the meantime, the fixture 11 requiring delicacy can be damaged.

### Prior art document

### [Patent Document]

Patent Document 1: Korean Patent No. 10-1026775 (registered on March 28, 2011)
Patent Document 2: Korean Patent No. 10-1091587 (registered on December 2, 2011) Document KR 2018 0 082 913 A discloses a multi scan abutment for an implant.

Document DE 10 2013 102 411 A1 discloses an abutment attachment for a dental implant.

### SUMMARY

In view of the foregoing, an object of the present invention is to provide an abutment that further facilitates an implant operation.

Specifically, it is an object of the present invention is to provide an abutment with which it is possible to consolidate all of a process of affixing a mount to a fixture, a process of affixing an impression coping to the fixture, and a process of affixing an abutment to the fixture during an implant operation into a single process.

The problems to be solved by the present invention are not limited to the above-described problems. There may be other problems to be solved by the present invention.

To this end, the present invention provides an abutment in accordance with claim 1. Advantageous embodiments are subject to the dependent claims and the following description and accompanying drawings.

According to the present invention, an abutment coupled to an upper part of a dental implant fixture, comprises: a coupler configured to be coupled to a polygonal groove or a polygonal protrusion of the fixture; and a body configured to be mounted with a crown which is an artificial tooth wherein the body has a shape to be connected to a mount driver used for coupling the abutment to the fixture and serves as a scan body for digital impression; wherein the body includes: a lower body having a trapezoidal shape with a diameter gradually increasing downwards; and an upper body formed on the lower body and having a polyprism shape, characterised in that the abutment further comprises a plurality of grooves formed at a specific height of the upper body along the circumference of the upper body.

According to the present invention, an implant operation can be performed more simply. Specifically, it is possible to provide an abutment with which it is possible to consolidate all of a process of affixing a mount to a fixture, a process of affixing an impression coping to the fixture, and a process of affixing an abutment to the fixture during an implant operation into a single process.

### BRIEF DESCRIPTION OF THE DRAWINGS

In the detailed description that follows, embodiments are described as illustrations only since various changes and modifications will become apparent to a person with ordinary skill in the art from the following detailed description. The use of the same reference numbers in different figures indicates similar or identical items.
**FIG. 1** is a configuration diagram of a general implant.
**FIG. 2** is a front view of an abutment.
**FIG. 3A** shows a side view of the abutment.
**FIG. 3B** shows a side view of the abutment.
**FIG. 3C** shows a plan view of the abutment.
**FIG. 4** is a perspective view of the abutment.
**FIG. 5** is a perspective view of the abutment.
**FIG. 6** is a diagram for explaining an example of a multi-implant operation.

### DETAILED DESCRIPTION

Hereinafter, embodiments of the present invention will be described in detail with reference to the accompanying drawings so that the present invention may be readily implemented by a person with ordinary skill in the art. However, it is to be noted that the present invention is not limited to the embodiments but can be embodied in various other ways. In the drawings, parts irrelevant to the description are omitted for the simplicity of explanation, and like reference numerals denote like parts through the whole document.

Through the whole document, the term "comprises or includes" and/or "comprising or including" used in the document means that one or more other components, steps, operation and/or existence or addition of elements are not excluded in addition to the described components, steps, operation and/or elements unless context dictates otherwise. Further, through the whole document, the term "connected to" or "coupled to" that is used to designate a connection or coupling of one element to another element includes both a case that an element is "directly connected or coupled to" another element and a case that an element is "electronically connected or coupled to" another element via still another element. Further, through the whole document, the term "on" that is used to designate a position of one element with respect to another element includes both a case that the one element is adjacent to the other element and a case that any other element exists between these two elements. Hereinafter, an exemplary embodiment of the present invention will be described in detail with reference to the accompanying configuration views or process flowcharts.

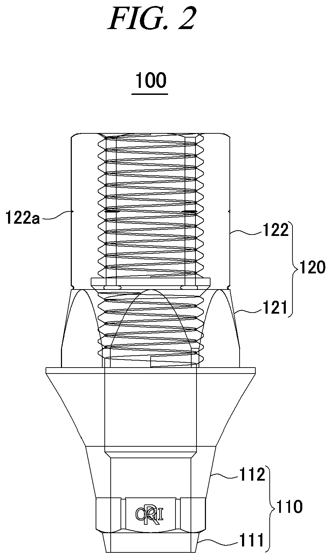

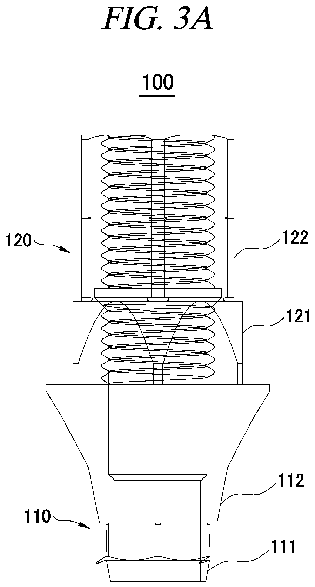

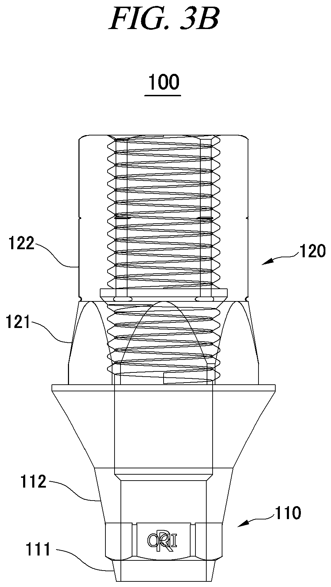

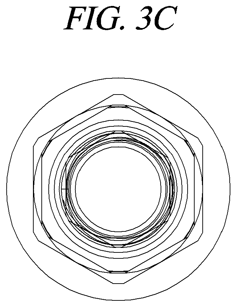

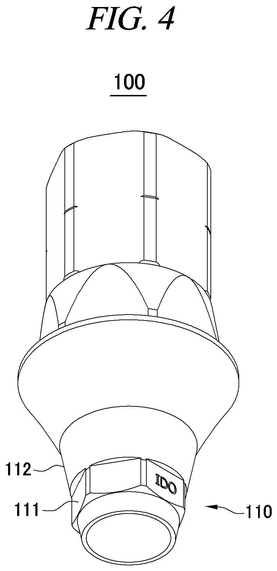

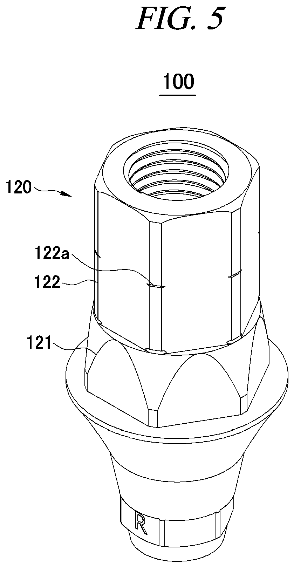

**FIG. 2** is a front view of an abutment, and **FIG. 3** shows a side view and a plan view of the abutment. Also, **FIG. 4** and **FIG. 5** are perspective views of the abutment.

Referring to **FIG. 2** and **FIG. 3****,** an abutment 100 coupled to an upper part of a dental implant fixture may include a coupler 110 and a body 120. **FIG. 3A** is a rear view of the abutment 100, **FIG. 3B** is a side view of the abutment 100, and **FIG. 3C** is a plan view of the abutment 100. However, the abutment 100 illustrated in **FIG. 2** and **FIG. 3** is merely an embodiment of the present disclosure, and various modifications based on the components illustrated in **FIG. 2** and **FIG. 3** are possible.

Referring to **FIG. 2** and **FIG. 3****,** the coupler 110 is coupled to a polygonal groove or a polygonal protrusion of the fixture. For example, the coupler 110 may have a shape with a diameter corresponding to the internal groove of the fixture.

Referring to **FIG. 4****,** the coupler 110 includes a lower coupler 111 and an upper coupler 112. The lower coupler 111 has a tapered shape with a diameter gradually decreasing downwards. Further, the upper coupler 112 is formed on the lower coupler 111 and has a tapered shape with a steeper inclination than the lower coupler 111.

An upper surface of the upper coupler 112 has a greater diameter than a lower surface of a lower body 121. For example, the upper coupler 112 may have a circular shape, and may be designed to be greater in diameter than the lower surface of the lower body 121.

The body 120 is mounted with a crown which is an artificial tooth and has a shape to be connected to a mount driver used for coupling to the fixture and serves as a scan body for digital impression.

For example, the body 120 serves as a scan body which can easily identify location information of the fixture during scanning by an intraoral scanner.

Specifically, the scan body needs to have a polygonal cross-section for data matching while the scan body is scanned. As described below, the body 120 may be designed to have a hexagonal shape in order for the abutment 100 according to the present invention to serve as a scan body. Also, the body 120 according to the present invention may have a rough surface through a sand blasting process and thus can more efficiently serve as a scan body.

The abutment 100 affixed to the fixture is scanned with the scanner, and, thus, it is possible to check the oral structure of the patient and the structure and shape of the fixture implanted in the patient's mouth.

Also, the body 120 may serve as a mount while the fixture is implanted. In general, the mount may be affixed to an inner groove of the fixture, and while the affixed mount is gripped and turned with the mount driver, the fixture is inserted into the gum of the patient.

Here, the abutment 100 according to the present invention is affixed to the fixture, and while the affixed abutment 100 is gripped and turned with a motor driver, the fixture can be implanted into the patient's gum.

To this end, the body 120 may have a hexagonal shape to be gripped by the motor driver. As shown in **FIG. 5****,** the body 120 may have a hexagonal structure.

Since the body 120 is designed to have a hexagonal shape, it is possible to suppress a turn of the abutment 100 in the patient's mouth.

The abutment 100 can serve as a mount. Thus, a separate mount is not needed.

The body 120 includes the lower body 121 and an upper body 122. The lower body 121 has a trapezoidal shape with a diameter gradually increasing downwards, and the upper body 122 is formed on the lower body 121 and has a polyprism shape.

Since the lower body 121 has a trapezoidal shape, it is possible to easily perform a multi-implant operation.

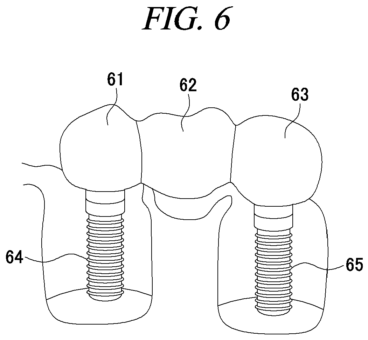

**FIG. 6** is a diagram for explaining an example of the multi-implant operation. Referring to **FIG. 6****,** the multi-implant operation is performed to simultaneously insert a plurality of crowns 61, 62 and 63 into a plurality of adjoining abutments. In this case, if adjoining fixtures are implanted at different angles from each other, it is difficult to insert the plurality of crowns 61, 62 and 63, or the crowns 61, 62 and 63 may interfere with each other.

To solve this problem, in the abutment 100 the lower body 121 has a trapezoidal shape. Therefore, even if the fixtures are implanted at different angles from each other, the plurality of crowns 61, 62 and 63 can be easily inserted during the multi-implant operation. Also, it is possible to reduce interference among the crowns 61, 62 and 63. Referring back to **FIG. 2** and **FIG. 3****,** the abutment 100 includes a plurality of grooves 122a formed at a specific height of the upper body 122 along the circumference of the upper body 122.

In general, the length of a tooth may vary in different patients, and, thus, the abutment 100 needs to be adapted to each individual patient.

The abutment 100 includes the plurality of grooves 122a formed along the circumference of the upper body 122, and, thus, the upper body 122 can be easily cut. That is, the length of the abutment 100 can be easily adjusted to fit the length of a tooth of each patient based on the plurality of grooves 122a.

The scope of the present invention is defined by the following claims rather than by the detailed description of the embodiment.

## Claims

1. An abutment (100) for being coupled to an upper part of a dental implant fixture, comprising:
a coupler (110) configured to be coupled to a polygonal groove or a polygonal protrusion of the fixture; and
a body (120) configured to be mounted with a crown which is an artificial tooth wherein the body (120) has a shape to be connected to a mount driver used for coupling the abutment (100) to the fixture and serves as a scan body for digital impression;
wherein the body (120) includes:
a lower body (121) having a trapezoidal shape with a diameter gradually increasing downwards; and
an upper body (122) formed on the lower body and having a polyprism shape,
**characterized in that** the abutment (100) further comprises a plurality of grooves (122a) formed at a specific height of the upper body (122) along the circumference of the upper body (122).

2. The abutment (100) of Claim 1,
wherein the body (120) has a hexagonal cross-section.

3. The abutment (100) of any one of Claims 1 or 2,
wherein the coupler (110) includes:
a lower coupler (111) having a tapered shape with a diameter gradually decreasing downwards; and
an upper coupler (112) formed on the lower coupler (111) and having a tapered shape with a steeper inclination than the lower coupler (111).

4. The abutment (100) of Claim 3,
wherein an upper surface of the upper coupler (112) has a greater diameter than a lower surface of the lower body (121).

## Patentansprüche

1. Abutment (100) zum Koppeln mit einem oberen Teil einer Zahnimplantathalterung, umfassend:
einen Koppler (110), der so konfiguriert ist, dass er mit einer polygonalen Nut oder einem polygonalen Vorsprung der Halterung gekoppelt werden kann; und
einen Körper (120), der so konfiguriert ist, dass er mit einer Krone, die ein künstlicher Zahn ist, montiert werden kann, wobei der Körper (120) eine Form aufweist, die mit einer Einbringhilfe verbunden werden kann, die zum Koppeln des Abutments (100) mit der Halterung verwendet wird, und als Scankörper für die digitale Abformung dient;
wobei der Körper (120) umfasst:
einen unteren Körper (121), der eine trapezförmige Form mit einem nach unten hin allmählich zunehmenden Durchmesser aufweist; und
einen oberen Körper (122), der auf dem unteren Körper ausgebildet ist und eine polyprismatische Form aufweist,
**dadurch gekennzeichnet, dass** das Abutment (100) weiterhin eine Mehrzahl von Nuten (122a) umfasst, die in einer bestimmten Höhe des oberen Körpers (122) entlang des Umfangs des oberen Körpers (122) ausgebildet sind.

2. Abutment (100) nach Anspruch 1,
wobei der Körper (120) einen hexagonalen Querschnitt aufweist.

3. Abutment (100) nach einem der Ansprüche 1 oder 2,
wobei der Koppler (110) umfasst:
einen unteren Koppler (111), der eine sich verjüngende Form mit einem nach unten hin allmählich abnehmenden Durchmesser aufweist; und
einen oberen Koppler (112), der auf dem unteren Koppler (111) ausgebildet ist und eine sich verjüngende Form mit einer steileren Neigung als der untere Koppler (111) aufweist.

4. Abutment (100) nach Anspruch 3,
wobei eine obere Oberfläche des oberen Kopplers (112) einen größeren Durchmesser als eine untere Oberfläche des unteren Körpers (121) aufweist.

## Revendications

1. Ancrage (100) à raccorder à une partie supérieure d'une fixation pour implant dentaire, comprenant :
un raccord (110) prévu pour être raccordé à une rainure polygonale ou à une saillie polygonale de la fixation ; et
un corps (120) prévu pour être monté avec une couronne, laquelle est une dent artificielle,
ledit corps (120) ayant une forme permettant sa connexion à un guide de montage utilisé pour raccorder l'ancrage (100) à la fixation, et sert de corps de balayage pour une impression numérique ;
où le corps (120) comprend :
un corps inférieur (121) ayant une forme trapézoïdale avec un diamètre augmentant progressivement vers le bas ; et
un corps supérieur (122) formé sur le corps inférieur et ayant une forme en polyprisme,
**caractérisé en ce que** ledit ancrage (100) comprend en outre une pluralité de rainures (122a) formées à une hauteur spécifique du corps supérieur (122) le long de la circonférence dudit corps supérieur (122).

2. Ancrage (100) selon la revendication 1,
où le corps (120) a une section transversale hexagonale.

3. Ancrage (100) selon la revendication 1 ou la revendication 2, où le raccord (110) comprend :
un raccord inférieur (111) de forme tronconique avec un diamètre diminuant progressivement vers le bas ; et
un raccord supérieur (112) formé sur le raccord inférieur (111) et ayant une forme tronconique avec une inclinaison supérieure à celle du raccord inférieur (111).

4. Ancrage (100) selon la revendication 3,
où la surface supérieure du raccord supérieur (112) est de diamètre supérieur à la surface inférieure du corps inférieur (121).
